# EUROPÄISCHE PATENTSCHRIFT

(11) **EP 2 398 130 B1**
(45) Veröffentlichungstag und Bekanntmachung des Hinweises auf die Patenterteilung: **07.12.2016**
(21) Anmeldenummer: 11002928.7
(22) Anmeldetag: 07.04.2011
(51) Int. Cl.: H02K 1/27, H02K 5/167

(54) **Elektrokleinmotor**
Small electric motor
Petit moteur électrique

(30) Priorität: 15.06.2010 DE 102010023813
(43) Veröffentlichungstag der Anmeldung: 21.12.2011
(73) Patentinhaber: Lakeview Innovation Ltd., 6374 Buochs (CH)
(72) Erfinder: Fritschy, Hugo, 6072 Sachseln (CH); Schulze, Jens Oliver, 6074 Giswil (CH); Pittini, Raniero, 6052 Hergiswil (CH); Boletis, Alexis, 6005 Luzern (CH); Ramon, David, 6372 Ennetmoos (CH); Jansing, Hans-Georg, 6060 Sarnen (CH); Lam, Minh Hieu, 6343 Rotkreuz (CH)
(74) Vertreter: Grünecker Patent- und Rechtsanwälte PartG mbB

(56) Entgegenhaltungen:
- CH-A5- 693 014
- DE-T2- 3 686 863
- DE-U1-202008 017 587
- US-A1- 2009 001 826

## Beschreibung

Die vorliegende Erfindung betrifft einen Elektrokleinmotor nach dem Oberbegriff des Anspruchs 1. Aus dem Stand der Technik sind Elektrokleinmotoren, auch Mikromotoren genannt, bekannt, deren Rotor im Wesentlichen einen vollzylindrischen Permanentmagneten umfasst, welcher in der Regel diametral magnetisiert ist. Der vollzylindrische Permanentmagnet des Rotors ist dabei von einem Stator mit zumeist mehreren Wicklungen umgeben. Um den Wirkungsgrad derartiger Kleinstmotoren zu steigern, sowie aus konstruktiven als auch fertigungstechnischen Gründen, wird oft auf eine durchgehende Welle verzichtet, die eine zentrale durchgehende Bohrung des Permanentmagneten erfordern würde. Es ist bekannt, stattdessen an den beiden Stirnseiten des vollzylindrischen Permanentmagneten sogenannte Wellenenden, im Folgenden auch als Wellenelemente bezeichnet, anzubringen. Die Wellenenden bilden damit zumeist den Lagersitz des Rotors aus.

Aus DE3686863T2 ist ein Rotor mit einem vollzylindrischen Permanentmagneten bekannt, auf dessen Stirnseiten zwei als Endstücke bezeichnete Wellenelemente aufgeklebt werden. Die Verklebung erfolgt laut Beschreibung mit Hilfe eines Kontaktklebers.

Ein Rotor für einen elektrischen Mikromotor ist zudem auch aus CH693014A5 bekannt. Auch dort werden die dem vollzylindrischen Permanentmagneten zugewandten planaren Stirnseiten der beiden Wellenenden unlösbar mit den jeweils gegenüberliegenden ebenfalls planaren Stirnflächen des Permanentmagneten verbunden. Die Verbindung erfolgt durch Verklebung oder durch Verschweißung mittels Laser. Auch ist beschrieben, dass die Stirnseiten des Permanentmagneten zentrale Ausnehmungen aufweisen können, in die entsprechend komplementäre Spitzen der Wellenenden hineinreichen, um die Bauteile zueinander zu zentrieren.

Ein ähnlicher Rotor für einen Kleinstmotor ist zudem aus JP11-289700 bekannt.

Aufgrund der geringen Abmaße von Elektrokleinmotoren ist eine gute Maßhaltigkeit, festgehalten durch geringe Fertigungs- sowie Montagetoleranzen, ein generelles Erfordernis bei der Herstellung derartiger Elektromotoren. Geringe Toleranzen sind zudem immer ein wichtiger Baustein zur Erreichung des Optimums vieler konstruktiver Ziele, wie z.B. zur Erzielung eines höheren Wirkungsgrads, da bei geringeren Fertigungs- sowie Montagetoleranzen beispielsweise der Luftspalt zwischen Rotor und Stator geringer gehalten werden kann. Bei den aus dem Stand der Technik bekannten Elektrokleinmotoren der eingangs erwähnten Art ergibt sich das Problem, dass die Präzision der Ausrichtung und Zentrierung der Wellenelemente in Bezug auf den vollzylindrischen Permanentmagneten nicht immer im gewünschten Ausmaß realisiert werden kann.

So kann es beispielsweise, falls die Wellenenden mit dem Permanentmagneten verschweißt werden, aufgrund der bei der Verschweißung auftretenden Temperaturentwicklung zum Verzug der betroffenen Bauteile kommen. Falls die Wellenenden mit dem Permanentmagneten verklebt werden, stellt die Klebeschicht jeweils zwischen einer Stirnseite eines Wellenelements und einer gegenüberliegenden Stirnseite des vollzylindrischen Permanentmagneten eine schwer kontrollierbare Ursache für Maßhaltigkeitsprobleme dar. Dies betrifft zum einen die Dicke der Klebeschicht, die sich auf die Gesamtlänge der aus Permanentmagnet sowie Wellenenden bestehenden Baugruppe auswirkt. Zudem wird durch die Klebeschicht eine leichte Verkippung der Wellenenden in Bezug auf den Permanentmagneten ermöglicht, wodurch die Axen der beiden Wellenenden nicht mehr koaxial zueinander verlaufen, sondern einen geringen Winkel zueinander aufweisen. Dies resultiert in Unwuchten und kann zu Lagerschäden führen. Die angesprochenen Ungenauigkeiten, die durch die aus dem Stand der Technik bekannten Verbindungsverfahren mittels Verklebung oder Verschweißung bedingt sind, lassen sich verfahrenstechnisch zwar minimieren. Dies erfordert allerdings einen hohen Aufwand bei der Herstellung, insbesondere bei der Montage.

Es ist daher Aufgabe der vorliegenden Erfindung, einen Elektrokleinmotor der eingangs erwähnten Art bereitzustellen, der bei der Herstellung auf einfache Art und Weise eine äußerst präzise Ausrichtung der Wellenelemente in Bezug auf den Permanentmagneten erlaubt und dabei gleichzeitig wirtschaftlich in der Bauweise und in der Herstellung ist. Zudem soll eine sehr gute mechanische Festigkeit und Spannungsstabilität der Verbindung erreicht werde. Die Aufgabe wird gelöst durch die Merkmale des unabhängigen Anspruchs 1. Demnach liegt bei einem Elektrokleinmotor mit einem Stator und mit einem Rotor, bei welchem ein Wellenelement mit einer Stirnseite des Permanentmagneten verklebt ist, eine erfindungsgemäße Lösung der Aufgabe vor, wenn das Wellenelement an seiner dem Permanentmagneten zugewandten Stirnseite mindestens eine Vertiefung aufweist, wobei der Klebstoff zur Verklebung von Wellenelement und Permanentmagnet in die Vertiefung eingebracht ist und die Stirnseite des Permanentmagneten im Bereich der Vertiefung kontaktiert. Durch die erfindungsgemäße Lösung wird ermöglicht, dass die toleranzbestimmenden Bereiche der Stirnseite des Wellenelements direkt an der gegenüberliegenden Stirnseite des Permanentmagneten anliegen, sodass zum einen hinsichtlich der Axiallänge der Rotorbaugruppe äußerst geringe Maßtoleranzen eingehalten werden können, und zum anderen eine mögliche Verkippung der Wellenelementachse zur Achse des vollzylindrischen Permanentmagneten lediglich über die Form- und Lagetoleranzen der aneinanderliegenden Stirnseiten der beiden Bauteile bestimmt ist und nicht zusätzlich einer schwer kontrollierbaren Toleranz aufgrund einer dazwischen liegenden Klebeschicht unterliegt. Die aneinanderliegenden Stirnseiten von Wellenelement und Permanentmagnet sind vorzugsweise planar ausgebildet und senkrecht zur Rotorachse ausgerichtet. Die erfindungsgemäße Lösung sieht vor, dass die Vertiefungen zur Aufnahme des Klebstoffs wellenelementseitig eingebracht sind, wodurch eine zusätzliche Bearbeitung der Stirnseite des vollzylindrischen Permanentmagneten nicht erforderlich ist. Dies bietet den Vorteil, dass eine Störung des magnetischen Flusses des vorzugsweise diametral magnetisierten Permanentmagneten, wie sie durch eine in die Stirnseite des Permanentmagneten eingebrachte Vertiefung, wenn auch in geringem Ausmaß hervorgerufen werden würde, vermieden wird. Zudem wäre eine spannende Bearbeitung der Stirnseite des Permanentmagneten zur Erzeugung der Vertiefungen je nach Material des Permanentmagneten in der Regel weitaus schwieriger als die Bearbeitung der Stirnseite des gegenüberliegenden Wellenelements. Das Wellenelement kann sowohl aus einem magnetisierbaren als auch aus einem nicht magnetisierbaren Material bestehen.

Weitere vorteilhafte Ausgestaltungen der vorliegenden Erfindung sind Gegenstand der Unteransprüche.

In einer bevorzugten Ausführungsform der vorliegenden Erfindung liegt zumindest ein Teil der Stirnseite des Wellenelements direkt an der Stirnseite des Permanentmagneten an. Dadurch wird der größte Vorteil, den der oben dargestellte Erfindungsgedanke bietet, vollständig ausgenutzt. Maßhaltigkeit sowie Lageungenauigkeiten werden lediglich über die Maßtoleranzen der Bauteile bzw. die Form- und Lagetoleranzen der aneinanderliegenden Stirnseiten beeinflusst und unterliegen nicht zusätzlich einer Toleranz, hervorgerufen durch den Klebespalt zwischen der Stirnseite des Wellenelements und der Stirnseite des Permanentmagneten. Die Verklebung der beiden Bauteile besteht lediglich im Bereich der in die Stirnseite des Wellenelements eingebrachten Vertiefung. Während diese Art der Verklebung besonders bevorzugt ist, hat sich herausgestellt, dass bei Klebstoffüberschuss eine geringe Menge Klebstoff aus der Vertiefung austritt und somit ein geringer, jedoch nicht durchgehender Klebstoffspalt zwischen den Stirnseiten der beiden Bauteile entsteht. Dennoch ist auch in diesem Fall die erzielbare Maßhaltigkeit weitaus besser als bei den aus dem Stand der Technik bekannten Rotoren. Vorzugweise ist an jeder der beiden Stirnseiten des Permanentmagneten jeweils ein Wellenelement vorgesehen. Die Wellenelemente können entweder selbst eine Teilwelle umfassen, oder es können an den Wellenelementen Aufnehmungen oder Befestigungsmöglichkeiten zum Anbringen eines Wellenteils vorgesehen sein. Hierdurch wird ermöglicht, dass sich die Rotorwelle zu beiden Seiten des Permanentmagneten erstreckt.

Die Herstellung der Verbindung zwischen Wellenelement und Permanentmagnet gestaltet sich montagetechnisch sehr einfach, wenn die Vertiefung kreisringförmig und koaxial zur Drehachse des Rotors ausgebildet ist. Die Ausrichtung des Wellenelements in Bezug auf den Permanentmagneten ist dabei äußerst präzise, wenn die Vertiefung im radial äußeren Bereich des Wellenelements ausgebildet ist. Dadurch kommen die achsnahen Bereiche der planaren Stirnseiten von Wellenelement und Permanentmagnet aufeinander zu liegen. In diesen achsnahen Bereichen der planaren Stirnseiten der beiden Bauteile können die Maß- sowie Form- und Lagetoleranzen fertigungstechnisch bedingt erfahrungsgemäß am besten eingehalten werden. Dadurch unterliegt sowohl die Länge der aus Permanentmagnet und Wellenelement bestehenden Rotorbaugruppe einer äußerst geringen Gesamttoleranz, auch wird dadurch eine mögliche Verkippung der Wellenelementachse zur Achse des Permanentmagneten weiter minimiert. Besonders bevorzugt erstreckt sich die Vertiefung in radialer Ausdehnung bis zum Außenumfang des Permanentmagneten. Alternativ dazu ist die Vertiefung in radialer Richtung vom Außenumfang des Permanentmagneten beabstandet.

In einer weiteren bevorzugten Ausführungsform der vorliegenden Erfindung weist das Wellenelement zumindest in einem axial an die Stirnseite des Permanentmagneten angrenzenden Bereich den gleichen Außendurchmesser auf wie der Permanentmagnet selbst. Dies erleichtert zum einen die Positionierung der Bauteile während der Montage, zum anderen ermöglicht diese Bauweise einen glatten und stabilen Übergang zwischen den beiden Bauteilen. Vorzugsweise ist der Durchmesser des Wellenelements nicht größer als der Durchmesser des Permanentmagneten, wodurch eine kompakte Bauweise in radialer Richtung erreicht wird. Falls der Durchmesser des Wellenelements dem Durchmesser des Permanentmagneten entspricht und sich die kreisringförmige Vertiefung in radialer Ausdehnung bis zum Außenumfang des Permanentmagneten bzw. des Wellenelements erstreckt, so ist die Vertiefung von außen zugänglich, wodurch der Klebstoff zur Montage der Rotorbaugruppe nach bereits erfolgter Ausrichtung der beiden Bauteile aneinander von außen in die Vertiefung eingebracht werden kann.

Hervorragende Festigkeiten der Klebeverbindung zwischen Wellenelement und Permanentmagnet konnten erzielt werden, wenn die Tiefe der Vertiefung maximal ein Millimeter beträgt.

In einer weiteren besonders bevorzugten Ausführungsform weist das Wellenelement einen hülsenförmigen Vorsprung auf. Der Vorsprung umschließt den Permanentmagneten in einem axial an die Stirnseite des Wellenelements angrenzenden Bereich formschlüssig. Hierdurch wird eine automatische Zentrierung der beiden Bauteile zueinander erreicht. Eine besonders stabile Verbindung zwischen Wellenelement und Permanentmagnet kann dabei erreicht werden, wenn zwischen Permanentmagnet und hülsenförmigen Vorsprung ein Presssitz besteht. Der Presssitz kann beispielsweise thermisch erzeugt werden, wenn der Permanentmagnet vor der Montage gekühlt wird, und das Wellenelement gleichzeitig erwärmt wird. Gegenüber einem rein mechanisch erzeugten Presssitz bietet ein thermisch erzeugter Presssitz den Vorteil, dass durch wesentlich größere Materialspannungen auch eine weitaus stabilere Verbindung hergestellt werden kann. Da die Kante zwischen der Stirnseite des Permanentmagneten und dessen Außenumfang oft abgerundet ist, muss die axiale Länge des hülsenförmigen Vorsprungs so groß sein, dass sie über die Rundung der Kante hinausgeht. Nur so kann eine präzise Zentrierung der beiden Bauteile zueinander erzielt werden.

In einer weiteren bevorzugten Ausführungsform ist der Permanentmagnet gekapselt und dazu von einer hülsenförmigen Kapsel umschlossen. Da die hülsenförmige Kapsel herstellungsbedingt zumindest an einer Seite offen sein muss, kann das Wellenelement einen Verschluss der Kapsel an der Stirnseite des Permanentmagneten bilden. Die hülsenförmige Kapsel kann sowohl einseitig geschlossen als auch an beiden Enden geöffnet sein, wobei im letzteren Fall die Möglichkeit besteht, die Kapsel an beiden Enden jeweils durch ein Wellenelement zu verschließen.

In einer weiteren bevorzugten Ausführungsform der vorliegenden Erfindung bildet das Wellenelement einen Lagersitz des Rotors aus. Alternativ dazu kann das Wellenelement eine Bohrung aufweisen, in die ein Wellenstummel eingepresst ist, wobei der Wellenstummel einen Lagersitz des Rotors bildet. Hierdurch wird eine höhere Flexibilität bei der Fertigung bzw. Herstellung erreicht, da das Wellenelement je nach Bedarf mit unterschiedlichen Wellenstummeln ausgerüstet werden kann. Je nach Ausführung des Elektrokleinmotors können die Wellenstummel beispielsweise unterschiedliche Längen sowie unterschiedliche Durchmesser und Formgebungen aufweisen.

In einer weiteren bevorzugten Ausführungsform ist der Permanentmagnet aus mehreren Teilmagneten zusammengesetzt. Dadurch kann ein äußerst starker Permanentmagnet hergestellt werden. In einer weiteren bevorzugten Ausführungsform weist der Permanentmagnet eine Bohrung oder eine Kavität auf, wodurch eventuell zusätzliche Bauteile beispielsweise zur Sensorik in die Rotorbaugruppe integriert werden können.

Vorzugsweise ist der Stator mit einer eisenlosen zylindrischen Wicklung ausgeführt. Dadurch können ein niedriges Leistungsgewicht sowie ein hoher Wirkungsgrad erreicht werden.

Bevorzugte Ausführungsbeispiele der vorliegenden Erfindung werden im folgenden anhand von Zeichnungen näher erläutert. Es zeigen:
**Figur 1****,** eine Explosionsschrägansicht des Rotors eines erfindungsgemäßen Elektrokleinmotors, bestehend aus einem vollzylindrischen Permanentmagneten und zwei Wellenelementen,
**Figur 2****,** den Rotor aus Figur 1 im fertig montieren Zustand, eingesetzt in einen erfindungsgemäßen Elektrokleinmotor (Längsschnitt),
**Figur 3****,** ein alternatives Ausführungsbeispiel eines erfindungsgemäßen Rotors im Längsschnitt,
**Figur 4****,** ein weiteres alternatives Ausführungsbeispiel eines erfindungsgemäßen Rotors mit einer einseitig geschlossenen hülsenförmigen Kapsel, ebenfalls im Längsschnitt, und
**Figur 5****,** eine Abwandlung des erfindungsgemäßen Rotors aus den Figuren 1 und 2 ebenfalls im Längsschnitt.

Für die folgenden Ausführungen gilt, dass durch gleiche Bezugszeichen gleiche Teile bezeichnet werden.

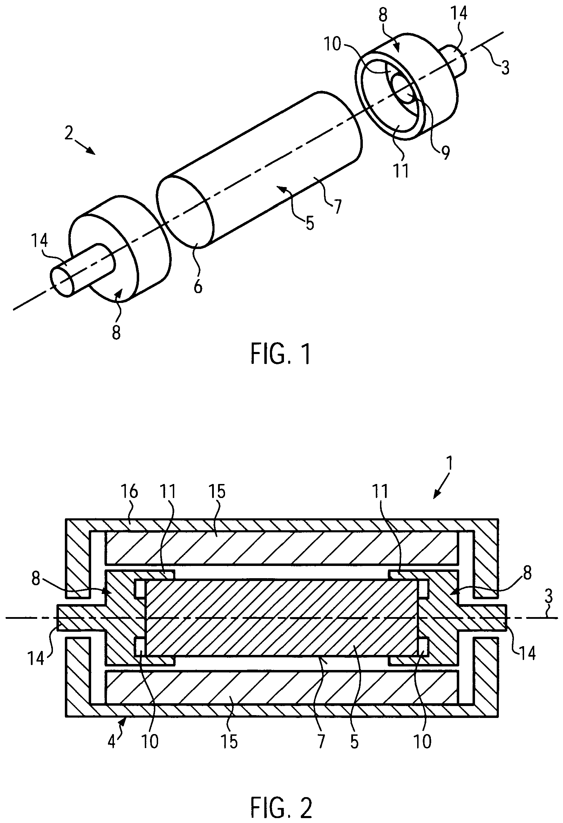

Die Figuren 1 und 2 zeigen ein erstes Ausführungsbeispiel des Rotors eines erfindungsgemäßen Elektrokleinmotors. In Figur 1 ist der erfindungsgemäße Rotor in einer Explosionsschrägansicht gezeigt, Figur 2 zeigt den Rotor in einem Längsschnitt, eingebaut in einen erfindungsgemäßen permanenterregten Elektrokleinmotor. Der Rotor 2 besteht aus einem vollzylindrischen Permanentmagneten 5 und jeweils einem Wellenelement 8 an einem der beiden Enden des vollzylindrischen Permanentmagneten 5 . Die Drehachse 3 der Rotorbaugruppe bzw. des Rotors 2 ist deckungsgleich mit den geometrischen Achsen von Permanentmagnet 5 und Wellenelementen 8. Jedes der beiden Wellenelemente 8 liegt mit seiner planaren Stirnseite 9 an jeweils einer Stirnseite 6 des Permanentmagneten an. Die Stirnseiten sowohl der Wellenelemente 8 als auch des Permanentmagneten 5 sind dabei senkrecht zur Rotorachse 3 ausgerichtet. In der Stirnseite 9 der Wellenelemente 8 ist eine kreisringförmige Vertiefung bzw. Nut 10 eingebracht. Die Wellenelemente 8 sind mit dem Permanentmagneten 5 verklebt, wobei der Klebstoff lediglich in die Vertiefungen 10 eingebracht ist, sodass die Wellenelemente 8 mit der übrigen Stirnseite 9 direkt an jeweils einer der beiden Stirnseiten 6 des Permanentmagneten anliegen. Die rotationssymmetrischen Wellenelemente 8 weisen in einem an den Permanentmagneten angrenzenden Bereich einen Durchmesser auf, der etwas größer ist als der Durchmesser des Permanentmagneten selbst. Ferner umfassen die Wellenelemente 8 ausgehend von deren Stirnseite 9 einen hülsenförmigen Vorsprung 11, der den Außenumfang 7 des Permanentmagneten formschlüssig umschließt. Zwischen dem hülsenförmigen Vorsprung 11 und dem Permanentmagneten 5 besteht jeweils ein vorzugsweise thermisch hergestellter Presssitz. Bei dem dargestellten Rotor 2 erstrecken sich die ringförmigen Vertiefungen 10 in ihrer radialen Ausdehnung bis zum Außenumfang 7 des Permanentmagneten. Durch eine nicht dargestellte Bohrung in den Wellenelementen 8, die entweder axial oder auch radial verlaufen kann und mit der Vertiefung 10 in Verbindung steht, ist es möglich, den Klebstoff für die Verklebung der Wellenelemente mit dem Permanentmagneten nach erfolgter Ausrichtung der Bauteile bzw. nach Herstellung des thermisch erzeugten Presssitzes mit dem Klebstoff auszufüllen. Wird auf eine derartige Bohrung verzichtet, so muss der Klebstoff in die Vertiefung 10 eingebracht werden, bevor die Bauteile zusammengesetzt werden. Jedes Wellenelement 8 weist einen Wellenstummel 14 auf, der in axialer Richtung vom Permanentmagneten 5 wegzeigend verläuft und einen deutlich geringeren Durchmesser aufweist als der Permanentmagnet 5 und als der maximale Durchmesser der Wellenelemente 8 bzw. deren hülsenförmiger Vorsprünge 11. Wie in Fig. 2 gezeigt ist, bilden die beiden Wellenstummel 14 jeweils einen Lagersitz und sind in dem Gehäuse 16 des Elektrokleinmotors 1 gelagert. Das Gehäuse 16 bildet zusammen mit mehreren am Umfang des Rotors angeordneten eisenlosen zylindrischen Wicklungen 15 den Stator 4 des Elektrokleinmotors 1.

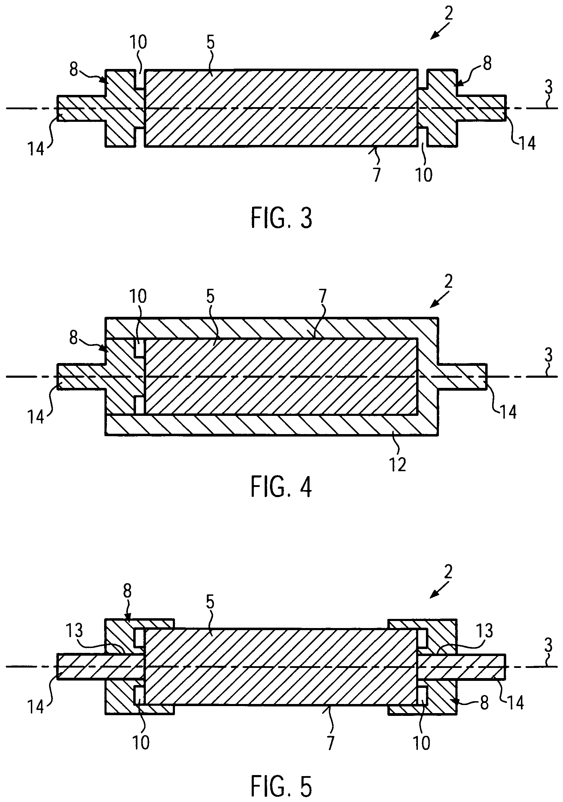

Figur 3 zeigt eine besonders einfach herstellbare Abwandlung des erfindungsgemäßen Rotors 2 aus den Figuren 1 und 2. Im Gegensatz zu dem in den Figuren 1 und 2 gezeigten Rotor 2 umfassen die Wellenelemente 8 keinen hülsenförmigen Vorsprung 11 und weisen einen maximalen Durchmesser auf, der dem Durchmesser des Permanentmagneten 5 entspricht. Dadurch sind die Vertiefungen 10 der Wellenelemente 8 frei zugänglich. Zur Montage der aus Permanentmagnet 5 und Wellenelementen 8 bestehenden Rotorbaugruppe 2 können die Bauteile auf einfache Art und Weise zusammengesetzt und ausgerichtet werden, worauf der Klebstoff von außen in die Vertiefungen 10 eingebracht wird.

Figur 4 zeigt ein alternatives bevorzugtes Ausführungsbeispiel eines erfindungsgemäßen Rotors 2. Der Permanentmagnet 5 ist hier von einer hülsenförmigen Kapsel 12, die einseitig auf der rechten Seite geschlossen ist, formschlüssig umkapselt. Das linke Wellenelement 8 entspricht den Wellenelementen aus Figur 3 und bildet den Verschluss der hülsenförmigen Kapsel 12. Genauso wie das Wellenelement 8 umfasst die hülsenförmige Kapsel 12 auf der rechten Seite ebenfalls einen Wellenstummel 14, der als Lagersitz des Rotors 2 dient. Das linke Wellenelement 8 ist ebenso von der hülsenförmigen Kapsel 12 umschlossen, wobei sowohl zwischen Kapsel 12 und Permanentmagnet 5, als auch zwischen Kapsel 12 und Wellenelement 8 ein Presssitz bestehen kann. Wenn der Permanentmagnet 5 aus mehreren Teilmagneten zusammengesetzt ist, so gewährleistet die Kapselung eine äußerst stabile Rotorbaugruppe.

Schließlich zeigt Fig. 5 eine weitere leichte Abwandlung des in den Fig. 1 und 2 gezeigten Rotors 2, die eine höhere Flexibilität bei der Herstellung des Elektrokleinmotors ermöglicht. Im Gegensatz zu den in den Fig. 1 und 2 gezeigten Wellenelementen 8 sind die Wellenstummel 14 bei dieser Variante nicht einstückig mit den Wellenelementen 8 ausgeführt, sondern jeweils in eine Bohrung 13 der Wellenelemente 8 eingepresst. Dadurch können je nach Bedarf unterschiedliche Wellenstummel 14 verwendet werden, um den Lagersitz sowie die Länge der Wellenstummel je nach Anwendungsfall geeignet anpassen zu können. Es versteht sich, dass die axialen Bohrungen 13 in den Wellenelementen 8 koaxial zur Achse des Permanentmagneten bzw. koaxial zur Drehachse 3 des Rotors 2 verlaufen müssen.

## Patentansprüche

1. Elektrokleinmotor (1) mit einem Stator (4) und mit einem Rotor (2), wobei der Rotor (2) einen vollzylindrischen Permanentmagneten (5) und zumindest ein, an einer Stirnseite (6) des Permanentmagneten (5) angebrachtes und mit diesem mittels Klebstoff verklebtes Wellenelement (8) umfasst, **dadurch gekennzeichnet, dass** das Wellenelement (8) an seiner dem Permanentmagneten (5) zugewandten Stirnseite (9) mindestens eine Vertiefung (10) aufweist, wobei der Klebstoff in die Vertiefung (10) eingebracht ist und die Stirnseite (6) des Permanentmagneten (5) im Bereich der Vertiefung (10) kontaktiert.

2. Elektrokleinmotor (1) nach Anspruch 1, **dadurch gekennzeichnet, dass** zumindest ein Teil der Stirnseite (9) des Wellenelements (8) direkt an der Stirnseite (6) des Permanentmagneten (5) anliegt.

3. Elektrokleinmotor (1) nach einem der Ansprüche 1 oder 2, **dadurch gekennzeichnet, dass** an jeder der beiden Stirnseiten (6) des Permanentmagneten (5) jeweils ein Wellenelement (8) vorgesehen ist.

4. Elektrokleinmotor (1) nach einem der Ansprüche 1 bis 3, **dadurch gekennzeichnet, dass** die Vertiefung (10) kreisringförmig und koaxial zur Drehachse (3) des Rotors (2) ausgebildet ist.

5. Elektrokleinmotor (1) nach einem der Ansprüche 1 bis 4, **dadurch gekennzeichnet, dass** die Vertiefung (10) im radial äußeren Bereich des Wellenelements (8) ausgebildet ist.

6. Elektrokleinmotor (1) nach einem der Ansprüche 1 bis 5, **dadurch gekennzeichnet, dass** sich die Vertiefung (10) in radialer Ausdehnung bis zum Außenumfang (7) des Permanentmagneten (5) erstreckt.

7. Elektrokleinmotor (1) nach einem der Ansprüche 1 bis 5, **dadurch gekennzeichnet, dass** die Vertiefung (10) in radialer Richtung vom Außenumfang (7) des Permanentmagneten (5) beabstandet ist.

8. Elektrokleinmotor (1) nach einem der Ansprüche 1 bis 7, **dadurch gekennzeichnet, dass** Wellenelement (8) zumindest in einem axial an die Stirnseite (6) des Permanentmagneten (5) angrenzenden Bereich den gleichen Außendurchmesser aufweist wie der Permanentmagnet (5).

9. Elektrokleinmotor (1) nach einem der Ansprüche 1 bis 8, **dadurch gekennzeichnet, dass** die Tiefe der Vertiefung (10) maximal 1 Millimeter beträgt.

10. Elektrokleinmotor (1) nach einem der Ansprüche 1 bis 9, **dadurch gekennzeichnet, dass** das Wellenelement (8) einen hülsenförmigen Vorsprung (11) aufweist, der den Permanentmagneten (5) in einem axial an die Stirnseite (9) des Wellenelements (8) angrenzenden Bereich formschlüssig umschließt.

11. Elektrokleinmotor (1) nach Anspruch 10, **dadurch gekennzeichnet, dass** zwischen Permanentmagnet (5) und hülsenförmigem Vorsprung (11) ein Presssitz besteht.

12. Elektrokleinmotor (1) nach einem der Ansprüche 1 bis 11, **dadurch gekennzeichnet, dass** der Permanentmagnet (5) von einer hülsenförmigen Kapsel (12) umschlossen ist, wobei das Wellenelement (8) die Kapsel (12) an der Stirnseite (6) des Permanentmagneten (5) verschließt.

13. Elektrokleinmotor (1) nach einem der Ansprüche 1 bis 12, **dadurch gekennzeichnet, dass** das Wellenelement (8) einen Lagersitz des Rotors (2) ausbildet.

14. Elektrokleinmotor (1) nach einem der Ansprüche 1 bis 12, **dadurch gekennzeichnet, dass** das Wellenelement (8) eine Bohrung (13) aufweist, in die ein Wellenstummel (14) eingepresst ist, wobei der Wellenstummel (14) einen Lagersitz des Rotors (2) bildet.

15. Elektrokleinmotor (1) nach einem der Ansprüche 1 bis 14, **dadurch gekennzeichnet, dass** der Stator (4) mit einer eisenlosen zylindrischen Wicklung (15) ausgeführt ist.

## Claims

1. A small electric motor (1) comprising a stator (4) and a rotor (2), the rotor (2) comprising a solid-cylindrical permanent magnet (5) and at least one shaft element (8) mounted on a face (6) of the permanent magnet (5) and bonded thereto by means of adhesive, **characterized in that** the shaft element (8) comprises at least one recess (10) on its face (9) facing the permanent magnet (5), the adhesive being introduced into the recess (10) and contacting the face (6) of the permanent magnet (5) in the area of the recess (10).

2. The small electric motor (1) according to claim 1, **characterized in that** at least part of the face (9) of the shaft element (8) directly abuts on the face (6) of the permanent magnet (5).

3. The small electric motor (1) according to any one of claims 1 or 2, **characterized in that** a respective shaft element (8) is provided on each of the two faces (6) of the permanent magnet (5).

4. The small electric motor (1) according to any one of claims 1 to 3, **characterized in that** the recess is given a circular annular configuration and is designed to be coaxial to the rotational axis (3) of the rotor (2).

5. The small electric motor (1) according to any one of claims 1 to 4, **characterized in that** the recess (10) is formed in the radially outer area of the shaft element (8).

6. The small electric motor (1) according to any one of claims 1 to 5, **characterized in that** the recess (10) extends in radial extension up to the outer circumference (7) of the permanent magnet (5).

7. The small electric motor (1) according to any one of claims 1 to 5, **characterized in that** the recess (10) is spaced apart in radial direction from the outer circumference (7) of the permanent magnet (5).

8. The small electric motor (1) according to any one of claims 1 to 7, **characterized in that** at least in a portion axially adjoining the face (6) of the permanent magnet (5) the shaft element (8) has the same outer diameter as the permanent magnet (5).

9. The small electric motor (1) according to any one of claims 1 to 8, **characterized in that** the depth of the recess (10) is not more than 1 millimeter.

10. The small electric motor (1) according to any one of claims 1 to 9, **characterized in that** the shaft element (8) comprises a sleeve-like projection (11) which encloses the permanent magnet (5) in form-fit fashion in a portion axially adjoining the face (9) of the shaft element (8).

11. The small electric motor (1) according to claim 10, **characterized in that** a press fit exists between permanent magnet (5) and sleeve-like projection (11).

12. The small electric motor (1) according to any one of claims 1 to 11, **characterized in that** the permanent magnet (5) is enclosed by a sleeve-like capsule (12), with the shaft element (8) closing the capsule (12) on the face (6) of the permanent magnet (5).

13. The small electric motor (1) according to any one of claims 1 to 12, **characterized in that** the shaft element (8) forms a bearing seat of the rotor (2).

14. The small electric motor (1) according to any one of claims 1 to 12, **characterized in that** the shaft element (8) comprises a bore (13) into which a shaft stub (14) is pressed, with the shaft stub (14) forming a bearing seat of the rotor (2).

15. The small electric motor (1) according to any one of claims 1 to 14, **characterized in that** the stator (4) is configured with an iron-free cylindrical winding (15).

## Revendications

1. Moteur électrique (1) de petite taille, également dit micromoteur, comportant un stator (4) et un rotor (2), le rotor (2) comprenant un aimant permanent (5), cylindrique plein, et au moins un élément d'arbre (8) placé sur un côté frontal (6) de l'aimant permanent (5) et collé à celui-ci au moyen d'une colle, **caractérisé en ce que** l'élément d'arbre (8) présente, sur son côté frontal (9) dirigé vers l'aimant permanent (5), au moins un creux (10), la colle étant introduite dans le creux (10) et entrant en contact avec le côté frontal (6) de l'aimant permanent (5), dans la zone du creux (10).

2. Moteur électrique (1) de petite taille selon la revendication 1, **caractérisé en ce qu'**au moins une partie du côté frontal (9) de l'élément d'arbre (8) s'appuie directement sur le côté frontal (6) de l'aimant permanent (5).

3. Moteur électrique (1) de petite taille selon l'une des revendications 1 ou 2, **caractérisé en ce que** sur chacun des deux côtés frontaux (6) de l'aimant permanent (5), est prévu respectivement un élément d'arbre (8).

4. Moteur électrique (1) de petite taille selon l'une des revendications 1 à 3, **caractérisé en ce que** le creux (10) est réalisé sous forme annulaire circulaire et coaxialement à l'axe de rotation (3) du rotor (2).

5. Moteur électrique (1) de petite taille selon l'une des revendications 1 à 4, **caractérisé en ce que** le creux (10) est réalisé dans la zone radialement extérieure de l'élément d'arbre (8).

6. Moteur électrique (1) de petite taille selon l'une des revendications 1 à 5, **caractérisé en ce que** le creux (10) s'étend dans son étendue radiale, jusqu'à la périphérie extérieure (7) de l'aimant permanent (5).

7. Moteur électrique (1) de petite taille selon l'une des revendications 1 à 5, **caractérisé en ce que** le creux (10) est espacé, dans la direction radiale, de la périphérie extérieure (7) de l'aimant permanent (5).

8. Moteur électrique (1) de petite taille selon l'une des revendications 1 à 7, **caractérisé en ce que** l'élément d'arbre (8) présente, au moins dans une zone axialement adjacente au côté frontal (6) de l'aimant permanent (5), le même diamètre extérieur que l'aimant permanent (5).

9. Moteur électrique (1) de petite taille selon l'une des revendications 1 à 8, **caractérisé en ce que** la profondeur du creux (10) est au maximum d'un 1 mm.

10. Moteur électrique (1) de petite taille selon l'une des revendications 1 à 9, **caractérisé en ce que** l'élément d'arbre (8) comporte une proéminence (11) en forme de douille, qui entoure l'aimant permanent (5), par complémentarité de formes, dans une zone axialement adjacente au côté frontal (9) de l'élément d'arbre (8).

11. Moteur électrique (1) de petite taille selon la revendication 10, **caractérisé en ce qu'**entre l'aimant permanent (5) et la proéminence (11) en forme de douille, est prévu un ajustement serré.

12. Moteur électrique (1) de petite taille selon l'une des revendications 1 à 11, **caractérisé en ce que** l'aimant permanent (5) est entouré par une capsule (12) en forme de douille, l'élément d'arbre (8) fermant la capsule (12) au niveau du côté frontal (6) de l'aimant permanent (5).

13. Moteur électrique (1) de petite taille selon l'une des revendications 1 à 12, **caractérisé en ce que** l'élément d'arbre (8) forme une portée de roulement ou de palier du rotor (2).

14. Moteur électrique (1) de petite taille selon l'une des revendications 1 à 12, **caractérisé en ce que** l'élément d'arbre (8) comporte un alésage (13) dans lequel est monté à force un bout d'arbre (14), le bout d'arbre (14) formant une portée de roulement ou de palier du rotor (2).

15. Moteur électrique (1) de petite taille selon l'une des revendications 1 à 14, **caractérisé en ce que** le stator (4) est d'une exécution à enroulement cylindrique (15) du type sans fer ou à noyau d'air.
